# EUROPÄISCHE PATENTSCHRIFT

(11) **EP 0 388 595 B1**
(45) Veröffentlichungstag und Bekanntmachung des Hinweises auf die Patenterteilung: **09.06.1993**
(21) Anmeldenummer: 90101630.3
(22) Anmeldetag: 27.01.1990
(51) Int. Cl.: G01B 7/28, B07C 5/08

(54) **Messeinrichtung zur berührungsfreien Erfassung der Gestalt von Bauteilen**
Contact free measuring device for determining the shape of components
Appareil de mesure sans contact pour mesurer la forme de composants

(30) Priorität: 24.02.1989 DE 8902231 U
(43) Veröffentlichungstag der Anmeldung: 26.09.1990
(73) Patentinhaber: ROBERT BOSCH GMBH, 70442 Stuttgart (DE)
(72) Erfinder: Dobler, Klaus, Dr. Dipl.-Ing., D-7016 Gerlingen (DE); Hachtel, Hansjörg, Dipl.-Ing., D-7251 Weissach (DE)

(56) Entgegenhaltungen:
- EP-A- 0 283 650
- DE-A- 3 538 339
- FR-A- 2 198 120
- GB-A- 1 125 272
- US-A- 4 457 622

## Beschreibung

### Stand der Technik

Die Erfindung geht aus von einer Meßeinrichtung zur berührungsfreien Erfassung der Gestalt von metallischen schraubenförmigen Bauteilen nach der Gattung des Hauptanspruchs. Es ist bereits eine derartige Meßeinrichtung bekannt, bei der die Gestalt von Schrauben mit Hilfe von mit hochfrequentem Wechselstrom durchflossenen Spulen bestimmt wird. Das Meßprinzip beruht auf der Änderung der Impedanz der Spulen, wenn sich die Form der Bauteile ändert. Diese Spulen sind als Flachspulen ausgebildet. Beim Messen relativ langer Schraubengewinde müssen die Spulen, will man die gesamte Gewindelänge erfassen, rechteckig oder ovalförmig ausgebildet sein. Dadurch bauen die Spulen aufwendig und sind in ihrer Herstellung kostenintensiv.

In der EP-A-0 283 650, insbesondere in den Figuren 13 und 15, wird eine Meßeinrichtung offenbart, bei der die Bauteile in eine Zylinderspule zur Meßwerterfassung eingetaucht werden. Zur Meßsignalgewinnung umgreift die Zylinderspule den gesamten Umfang des Bauteils. Dadurch wird eine möglichst große, in diesem Fall die gesamte Fläche des Bauteils während der Messung erfaßt. Auch die übrigen in diesem Dokument offenbarten Ausführungsbeispiele lehren die Verwendung einer möglichst großen Meßfläche. Dadurch baut die Meßeinrichtung aber kompliziert und aufwendig und ist immer nur schwer den unterschiedlichen Anforderungen, insbesondere den Längen der zu messenden Bauteile, anzupassen.

Bei dem in der Schrift GB-A-1 125 272 beschriebenen Meßsystem wird ein völlig anderes physikalisches Prinzip verwendet. Hier wird die Oberfläche des Bauteils mit mehreren Sensoren abgetastet, die aus jeweils einer einen Magnetkern umgreifenden Spule bestehen. Das Meßsignals ist abhängig von einer Luftspaltänderung zwischen dem Bauteil und dem Magnetkern. Die Messung ist hierbei nur bei Stillstand des Bauteils auszuführen. Nach der Messung wird das Bauteil mit Hilfe eines Kolbens weitergeschoben. Im Unterschied dazu ist es bei der Erfindung möglich, bereits während der Vorbeibewegung des Bauteils die Messung auszuführen.

### Vorteile der Erfindung

Die erfindungsgemäße Einrichtung mit den kennzeichnenden Merkmalen des Hauptanspruchs hat demgegenüber den Vorteil, daß die Spulengeometrie leichter den unterschiedlichen Längen der Bauteile angepaßt werden können. An die Präzision der Spulenwicklung brauchen nur geringe Anforderungen gestellt zu werden. Es ist sogar möglich, handelsübliche Drosselspulen zu verwenden.

Durch die in den Unteransprüchen aufgeführten Maßnahmen sind vorteilhafte Weiterbildungen und Verbesserungen der im Hauptanspruch angegebenen Meßeinrichtung möglich.

### Zeichnung

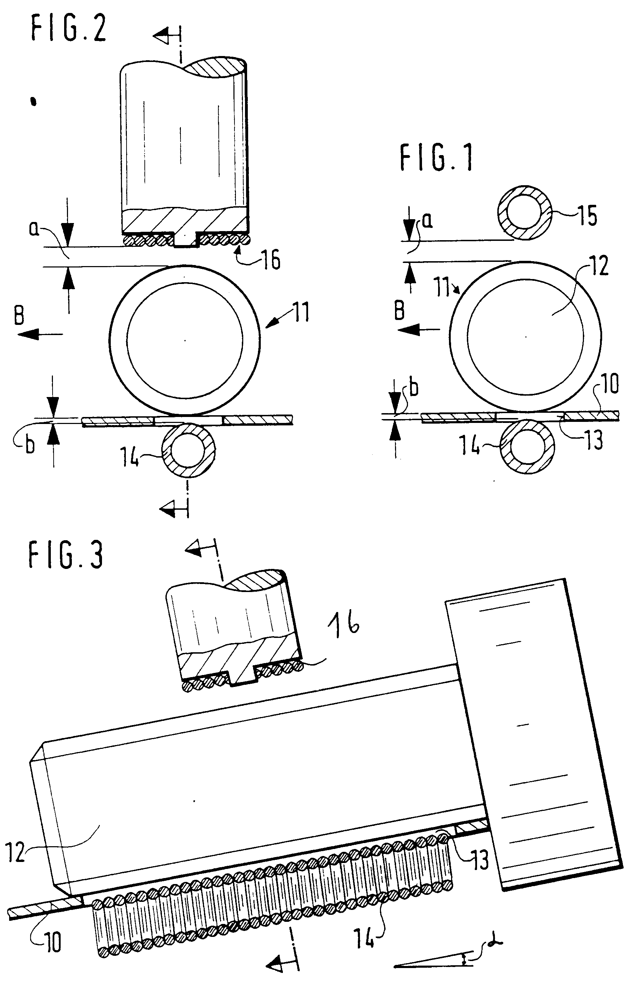

Ein Ausführungsbeispiel der Erfindung ist in der Zeichnung dargestellt und in der nachfolgenden Beschreibung näher erläutert. Es zeigen Figur 1 und 2 je einen Schnitt durch eine Laufschiene eines Förderers und Figur 3 einen Schnitt nach Figur 2.

### Beschreibung des Ausführungsbeispieles

In der Figur 1 ist mit 10 eine als Laufschiene dienende Seitenwand eines Förderers 11 bezeichnet, an der eine zu bestimmende Schraube 12 entlang gleitet oder rollt. Die Laufschiene 10 kann aus jedem Material hergestellt sein. Besteht sie aus metallischem Werkstoff, so ist ein Fenster 13 zweckmäßig. Im Bereich dieses Fensters 13 ist eine Spule 14 angeordnet, die die Gestalt der Schraube 12 überprüft. Auf der gegenüberliegenden Seite kann eine zweite Spule 15 vorgesehen sein. Die Meßsignale der Spulen 14, 15 werden in der Auswerteschaltung mit vorgegebenen Sollwerten verglichen, so daß die Schrauben bezüglich ihrer Qualität aussortiert werden können. Die Spulen 14, 15 sind zylinderförmig gestaltet, wobei ihre Symmetrieachsen parallel zu den Symmetrieachsen der zu messenden Schrauben 12 verlaufen. Die Länge der Zylinderspule entspricht dabei etwa der Länge des zu überwachenden Bereichs der Schraube 12. In besonders einfacher Weise können als Zylinderspulen im Handel übliche Drosselspulen verwendet werden. Diese sind preisgünstiger erhältlich und einfacher einzubauen als Flachspulen. Die Drosselspulen tasten aber nur einen Teilbereich des Schaftumfangs der Schraube 12 ab. Dies ist jedoch in den meisten Fällen ausreichend, um geeignete Meßsignale zu gewinnen. Wie in der Figur 2 dargestellt, ist es aber auch möglich, bei der Meßeinrichtung Zylinderspulen und Flachspulen gleichzeitig zu verwenden.

Bei Inbetriebnahme des Förderers 11 werden die Schrauben 12 nacheinander in Pfeilrichtung B zwischen den beiden Spulen 14, 15 hindurchgeführt. Werden dabei die Spulen 14, 15 von einem hochfrequenten Wechselstrom durchflossen, so entstehen dadurch an den Spulen 14, 15 magnetische Wechselfelder. Diese bewirken auf den metallischen Oberflächen der Gewindeschäfte der Schrauben 12 Wirbelströme. Je größer dabei die vom Magnetfeld durchsetzte Fläche der Schäfte ist, desto mehr Wirbelströme werden erzeugt. Ferner ist die Größe der erzeugten Wirbelströme abhängig vom Material der Schrauben sowie vom Abstand der Spulen 14, 15 zu den Oberflächen der Schäfte. Durch die erzeugten Wirbelströme wird der Spulen-Wechselstromwiderstand verändert, was eine Veränderung der an den Spulen 14, 15 anliegenden Spannung bewirkt. Da in den Figuren der Abstand b der Schraube 12 zu den Spulen immer gleich ist, können Änderungen des Wechselstromwiderstands nur auf einer Abweichung der Form des Gewindes beruhen. Hat die Schraube 12 z.B. eine andere Steigung als die Eichschraube, oder ist das Gewinde an einer oder mehreren Stellen beschädigt, treten dadurch Änderungen des Wechselstromwiderstands auf. Das Meßsignal weicht dann vom vorgegebenen Sollwert ab. Mit Hilfe der anderen Spule 15 wird der Durchmesser des Schraube 12 bestimmt. Abhängig vom Abstand a zwischen der Spule 14 bzw. 15 und der Schraube 12 erhält man ein bestimmtes Meßsignal. Durch den festen Abstand zur Wand 10 ist es ferner möglich, dem jeweiligen Meßsignal auch einen entsprechenden Größenwert zuzuordnen. Wäre der Abstand a zur Schraube 12 verringert, so würde dies eine Verminderung der in der Oberfläche der Schraube 12 erzeugten Wirbelströme bewirken und damit eine Vergrößerung der Widerstandswerts der Spule 15. Dabei wird bevorzugt die Spule 14 zur Gewindeprüfung verwendet und die Spule 15 bevorzugt zur Überprüfung des Durchmessers der Schraube 12.

Die Zylinderspulen können auch bei einer nach dem ferromagnetischen Effekt arbeitenden Meßeinrichtung verwendet werden. Hierbei wird die Beeinflussung des elektromagnetischen Wechselfeldes der Spule durch die ferromagnetischen Eigenschaften des Schraubenmaterials ausgenützt.

## Patentansprüche

1. Meßeinrichtung zur berührungsfreien Erfassung der Gestalt von insbesondere schraubenförmigen Bauteilen (12) aus ferro- und/oder nicht ferromagnetischem, jedoch elektrisch leitendem Material, wobei die Meßeinrichtung mindestens eine von einem Wechselstrom durchflossene Spule aufweist, deren auf einer Veränderung des Wechselstromwiderstandes der Spule beruhende Meßspannung mit einem vorgegebenen Sollwert verglichen wird und die Teil einer elektronischen Auswerteschaltung ist, und wobei Mittel zum Vorbeibewegen der Bauteile (12) an der oder den Spule(n) vorgesehen sind, dadurch gekennzeichnet, daß mindestens eine der Spulen eine Zylinderspule (14,15) ist.

2. Meßeinrichtung nach Anspruch 1, dadurch gekennzeichnet, daß die Meßeinrichtung in einer Fördervorrichtung (11) für das Bauteil (12) angeordnet ist, und daß mindestens zwei gegenüberliegende Spulen (14,15,16) in Reihe miteinander in einem Brückenzweig der Auswerteschaltung verschaltet sind.

3. Meßeinrichtung nach Anspruch 1 und/oder 2, dadurch gekennzeichnet, daß eine Spule (14, 15) mindestens die Länge des Schafts des Bauteils (12) aufweist.

4. Meßeinrichtung nach einem der Ansprüche 1 bis 3, dadurch gekennzeichnet, daß die Zylinderspulen Drosselspulen sind.

## Claims

1. Instrument for the non-touching detection of the shape of, in particular, screw-shaped components (12) consisting of a material which is ferromagnetic and/or non-ferromagnetic but electrically conductive, the instrument having at least one coil through which an alternating current flows and whose measurement voltage, which is derived from a change in the impedance of the coil, is compared with a predetermined desired value, and which coil is part of an electronic evaluation circuit, and means for moving components (12) past the coil or coils being provided, characterised in that at least one of the coils is a cylindrical coil (14, 15).

2. Instrument according to Claim 1, characterised in that the instrument is arranged in a conveyor device (11) for the component (12), and in that at least two opposite coils (14, 15, 16) are connected in series with one another in a bridge arm of the evaluation circuit.

3. Instrument according to Claim 1 and/or 2, characterised in that one coil (14, 15) has at least the length of the shank of the component (12).

4. Instrument according to one of Claims 1 to 3, characterised in that the cylindrical coils are inductor coils.

## Revendications

1. Dispositif de mesure destiné à l'examen sans contact de la conformation de composants (12), en particulier de composants filetés, en matériaux ferromagnétiques ou non, mais conducteurs de l'électricité, dispositif qui comporte au moins une bobine alimentée en courant alternatif, dont la tension mesurée, qui varie en fonction de l'impédance de la bobine, est comparée à une valeur pré-imposée, cette bobine faisant partie d'un circuit électronique d'exploitation tandis que des moyens sont prévus pour faire passer les composants (12) devant le ou les bobines, caractérisé en ce qu'au moins une des bobines est une bobine cylindrique (14, 15).

2. Dispositif de mesure selon la revendication 1, caractérisé en ce que le dispositif est monté dans un dispositif de transport (11) des composants (12) et qu'au moins deux bobines (14, 15, 16) se faisant face sont montées en série dans une branche du pont du circuit électronique d'exploitation.

3. Dispositif de mesure selon la revendication 1 ou 2, caractérisé en ce qu'une bobine (14, 15) a au moins la longueur de la tige du composant (12).

4. Dispositif de mesure selon une des revendications 1 à 3, caractérisé en ce que les bobines cylindriques sont des bobines à self.
